# DEMANDE DE BREVET EUROPEEN

(11) **EP 1 747 927 A2**
(43) Date de publication de la demande: **31.01.2007**
(21) Numéro de dépôt: 06117657.4
(22) Date de dépôt: 21.07.2006
(51) Int. Cl.: B60J 7/00

(54) **Dispositif d'obturation d'une baie ménagée dans un véhicule automobile, à rails non parallèles et pions mobiles, et véhicule correspondant**

(30) Priorité: 29.07.2005 FR 0508170; 07.11.2005 FR 0511309
(71) Demandeur: WAGON SAS, 79302 Bressuire Cédex (FR)
(72) Inventeur: Destouches, Nicolas, 35650, LE RHEU (FR)
(74) Mandataire: Bioret, Ludovic

(57) **Abrégé**

L'invention concerne un dispositif d'obturation d'une baie ménagée dans un véhicule automobile, comprenant une partie fixe et au moins un panneau mobile (13) par rapport à ladite partie fixe et guidé en coulissement par deux rails (12) non parallèles solidarisés à ladite partie fixe, ledit panneau mobile pouvant prendre une position fermée dans laquelle il obture une ouverture définie dans ladite partie fixe et une position ouverte dans laquelle il libère au moins en partie ladite ouverture. Selon l'invention, ledit panneau mobile (13) porte au moins un élément de maintien et/ou de guidage, présentant une tête (151) guidée dans un desdits rails (12), ledit élément de maintien et/ou de guidage coopérant avec des moyens pour maintenir en contact ladite tête avec l'intérieur dudit rail.

## Description

Le domaine de l'invention est celui des baies de véhicules automobiles. Plus précisément, l'invention concerne les dispositifs d'obturation d'une baie ménagée dans la carrosserie d'un véhicule, et comprenant une partie mobile coulissante, susceptible de libérer ou de fermer une ouverture.

Classiquement, pour obturer la baie d'un véhicule, qu'il s'agisse d'une automobile, d'un véhicule utilitaire, d'un camion, d'un autobus ou d'un wagon de chemin de fer, on rapporte une glace, maintenue par un cadre de liaison. Ce dernier présente une partie interne et une partie externe, qui viennent pincer simultanément les bords de la glace et de l'ouverture ménagée dans la carrosserie, avec une garniture d'étanchéité.

Une autre technique est décrite dans les documents de brevets EP-0 778 168 et EP-0 857 844, au nom du même titulaire que la présente demande de brevet. Le dispositif d'obturation (appelé par la suite « baie flush ») présenté dans ces documents comprend une partie fixe et une partie mobile par rapport à la partie fixe. La partie mobile est reliée à la partie fixe par des éléments fonctionnels qui assurent la mobilité requise et qui sont rapportés sur la face de la partie fixe tournée vers l'intérieur du véhicule.

Pour assurer un coulissement de la partie mobile, les éléments fonctionnels comprennent deux rails parallèles, ayant des fonctions de guidage et/ou de maintien de cette partie mobile. Cette technique s'avère très efficace dans de nombreuses situations, notamment lorsque les baies présentent une grande surface et/ou une forme sensiblement rectangulaire.

Cependant, dans de nombreux véhicules, les baies ne sont pas rectangulaires, mais de formes trapézoïdales, ou présentant au moins un bord arrondi ou incliné, ou plus généralement de forme quelconque, adaptée au véhicule, en fonction de critères esthétiques par exemple.

Dans ce cas, l'espace entre les rails est limité par le ou les petit(s) côté(s) de la baie, et/ou la surface de l'ouverture est de surface très réduite. Dans les deux cas, cela n'est pas acceptable pour un véhicule moderne.

En outre, les rails sont généralement montés au voisinage des bords de la partie fixe, de façon qu'ils puissent être dissimulés, par exemple par de la sérigraphie rapportée sur la partie fixe. Lorsque la baie n'est pas de forme rectangulaire, au moins une partie de l'un des rails se trouve visible, à moins de sérigraphier la plus grande partie de la vitre, ce qui n'est clairement pas l'objectif !

Une technique mettant en oeuvre des rails non parallèles est décrite dans le document de brevet FR―01 12404, au nom du même titulaire que la présente demande de brevet. Le dispositif de guidage et/ou maintien présenté dans ce document comprend deux ensembles coulissants, le premier ensemble s'apparentant à un ensemble glissière et le second ensemble étant pourvu d'un degré de liberté cinématique supplémentaire afin de compenser l'écartement variable entre les rails.

Il apparaît cependant que le guidage employant cette technique peut présenter des problèmes d'efficacité et de fiabilité, du fait de l'absence de parallélisme des rails.

Il est par ailleurs peu aisé de contrôler le bon fonctionnement du dispositif, en raison des jeux existants dans les véhicules automobiles, ou pouvant apparaître avec les temps.

Une autre difficulté de cette technique est, au moins dans certains cas, le montage du panneau mobile sur les rails.

Ces problèmes sont encore plus importants lorsque les rails ne sont plus de profil axial parfaitement rectiligne.

L'invention a notamment pour objectif de pallier ces inconvénients de l'état de l'art.

Plus précisément, un objectif de l'invention est de fournir une technique d'obturation d'une baie de véhicule automobile mettant en oeuvre un panneau mobile coulissant de type affleurant, qui soit adaptée à des baies de formes diverses, et notamment trapézoïdales ou partiellement trapézoïdales, et plus généralement présentant des dimensions non constantes.

Un second objectif de l'invention est de maintenir efficacement le panneau coulissant, dont la répartition de masse peut être non uniforme, notamment pour éviter le basculement dudit panneau par rapport aux rails de guidage qui pourrait entraîner un arc-boutement préjudiciable au mouvement de coulissement ou même un blocage du panneau.

Un troisième objectif de l'invention est de proposer une technique d'obturation d'une baie de véhicule automobile adaptée à des rails sensiblement non parallèles, et de profils non nécessairement rectilignes, ceci pour s'adapter aux géométries de plus en plus complexes de l'habitacle des véhicules automobiles modernes.

Un autre objectif de l'invention est de fournir une telle technique d'obturation d'une baie, qui permette de ménager une ouverture de dimension importante, quelle que soit la forme générale de la baie.

L'invention a également pour objectif de fournir une telle technique, qui soit simple à mettre en oeuvre, et peu coûteuse.

Un autre objectif de l'invention est de fournir une telle technique, qui permette de compenser efficacement des écarts et des jeux entre différents éléments.

Encore un objectif de l'invention est de fournir une telle technique d'obturation d'une baie, qui conserve l'ensemble des avantages des « baies flush » déjà développées par le titulaire de la présente demande, et notamment :
- aspect esthétique affleurant ;
- aspects aérodynamiques ;
- facilité et coût réduit de fabrication ;
- facilité et coût réduit de montage ;
- ...

Ces objectifs, ainsi que d'autres qui apparaîtront par la suite, sont atteints à l'aide d'un dispositif d'obturation d'une baie ménagée dans un véhicule automobile, comprenant une partie fixe et au moins un panneau mobile par rapport à ladite partie fixe et guidé en coulissement par deux rails non parallèles solidarisés à ladite partie fixe, ledit panneau mobile pouvant prendre une position fermée dans laquelle il obture une ouverture défmie dans ladite partie fixe et une position ouverte dans laquelle il libère au moins en partie ladite ouverture.

Selon l'invention, ledit panneau mobile porte au moins un élément de maintien et/ou de guidage, présentant une tête guidée dans un desdits rails, ledit élément de maintien et/ou de guidage (ou pion) coopérant avec des moyens de rappel tendant à maintenir en contact ladite tête avec l'intérieur dudit rail.

Ainsi, le guidage est optimisé, de façon simple et efficace, le pion restant en permanence en contact avec la zone de guidage du rail, quelle que soit la position du panneau mobile et quels que soient les jeux éventuels.

De façon avantageuse, lesdits moyens pour maintenir en contact ladite tête avec l'intérieur dudit rail comprennent des moyens de rappel. Ce mode de réalisation permet une mise en oeuvre simple et efficace.

Ladite tête est préférentiellement montée sur un corps sur lequel lesdits moyens de rappel sont montés et/ou le ou lesdits éléments de maintien et/ou de guidage présentent une forme de révolution et/ou la section dudit corps est inférieure à la section de ladite tête, de façon à maintenir lesdits moyens de rappel.

Selon un premier mode de mise en oeuvre avantageux, les moyens de rappel comprennent au moins un ressort hélicoïdal et/ou sont montés à l'intérieur du et/ou sous le corps de l'élément de maintien et/ou de guidage.

Selon une approche préférentielle, le ou lesdits éléments de maintien et/ou de guidage se déplacent suivant un axe par rapport au panneau mobile.

Selon une autre approche préférentielle, ladite tête de l'élément de maintien et/ou de guidage est de forme sensiblement cylindrique ou semi-hémisphérique. Ces formes permettent d'assurer un bon contact avec ledit rail.

Selon une autre approche d'un premier mode de mise en oeuvre avantageux, lesdits moyens de rappel comprennent au moins une lame flexible.

Selon un second mode de réalisation avantageux, ladite tête présente au moins une portion d'accrochage avec un logement correspondant formé dans ledit rail et/ou ladite portion d'accrochage et ledit logement s'étendent sensiblement perpendiculairement à l'axe desdits moyens de maintien et/ou de guidage.

Bien sûr les différents modes considérés ci-dessus peuvent être combinés.

L'invention concerne également un véhicule automobile comprenant au moins un dispositif d'obturation d'une baie ménagée dans ledit véhicule automobile, comprenant une partie fixe et au moins un panneau mobile par rapport à ladite partie fixe et guidé en coulissement par deux rails non parallèles solidarisés à ladite partie fixe, ledit panneau mobile pouvant prendre une position fermée dans laquelle il obture une ouverture défmie dans ladite partie fixe et une position ouverte dans laquelle il libère au moins en partie ladite ouverture, caractérisé en ce que ledit panneau mobile porte au moins un élément de maintien et/ou de guidage, présentant une tête guidée dans un desdits rails, ledit élément de maintien et/ou de guidage coopérant avec des moyens pour maintenir en contact ladite tête avec l'intérieur dudit rail.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- les figures 1A et 1B illustrent, de façon schématique, un premier mode de réalisation de l'invention ;
- les figures 2A et 2B instruisent, de façon schématique, le fonctionnement des pions mobiles des figures 1A et 1B ;
- les figures 3A, 3B, 3C et 3D sont des vues de détail de variantes d'appariement de l'ensemble panneau mobile, élément de maintien et/ou de guidage et moyens de rappel associés ;
- les figures 4 et 5 présentent respectivement deux variantes de mise en oeuvre du mode de réalisation des figures 1A et AB ;
- les figures 6A et 6B illustrent un mode de réalisation du maintien et du guidage d'un panneau mobile;
- les figures 7A et 7B proposent encore un autre mode de réalisation du maintien et du guidage d'un panneau mobile;
- les figures 8A à 8D montrent le détail d'une autre variante au maintien et au guidage d'un panneau mobile.

Comme déjà mentionné, le dispositif est avantageusement une « baie flush », par exemple du type décrit dans le document de brevet EP-0 778 168, déjà commentée rapidement en préambule.

Il comprend donc une partie fixe qui sera rapportée sur la carrosserie du véhicule, par exemple par collage. Une partie mobile, montée sur la partie fixe, permet de fermer ou de libérer une ouverture définie dans cette partie fixe. Des rails fixés (ou moulés) sur la face intérieure de la partie fixe assurent le guidage de la partie mobile, celle-ci coulissant le long de la partie fixe. Indifféremment, les rails de guidage peuvent être fixés sur des montants solidaires de la carrosserie du véhicule.

Avantageusement, le mouvement de la partie mobile par rapport à la partie fixe est décomposé en deux déplacements indépendants :
- un déplacement perpendiculaire par rapport au plan formé par la partie fixe, permettant le passage d'une position fermée, et verrouillée, dans laquelle la partie mobile se trouve dans le même plan que la partie fixe, et obture l'ouverture, à une position de libération, dans laquelle la partie mobile est décalée par rapport à la partie fixe dans un plan de coulissement, de façon à permettre le coulissement ;
- un déplacement dans le plan de coulissement, parallèle au plan formé par la partie fixe.

Bien sûr, d'autres mouvements sont possibles. Par exemple, la partie mobile peut suivre une courbe selon laquelle les deux mouvements (verrouillage/déverrouillage et coulissement) sont liés.

Par ailleurs, le dispositif de l'invention s'applique notamment aux parois latérales d'un véhicule. Cependant, il peut également être mis en oeuvre sur le pavillon d'un véhicule, et plus généralement en tout emplacement où cela serait souhaitable.

La glace peut être en verre ou en un matériau transparent ou translucide adapté. Elle peut également être réalisée dans le même matériau que la carrosserie. Elle peut être plane, bombée ou incurvée. On notera également qu'il est possible d'utiliser plusieurs glaces indépendantes pour obturer une baie (par exemple une glace se déplaçant vers la gauche et l'autre vers la droite). Le cas échéant, l'une des glaces peut être fixe.

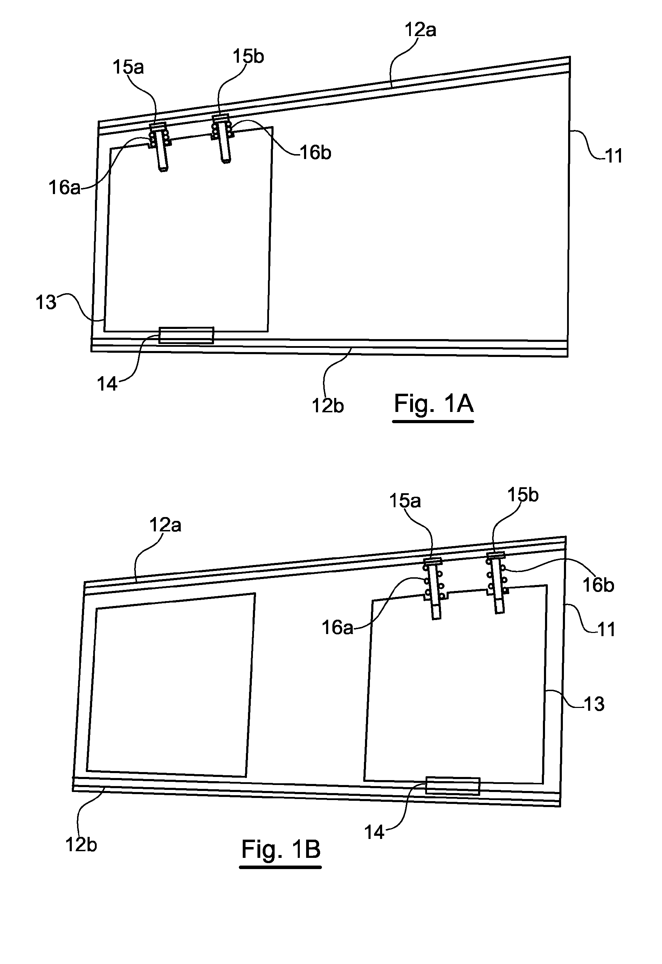

L'invention propose donc une technique permettant de mettre en oeuvre un panneau mobile coulissant maintenu et/ou guidé par des rails non parallèles. Le mode de réalisation, décrit par la suite, concerne un dispositif destiné à équiper une baie trapézoïdale, ainsi que cela est illustré par les figures 1A et 1B.

On constate que les rails 12ₐ et 12_{b} ne sont pas parallèles, et que leur mise en oeuvre de façon parallèle ne serait pas acceptable : la surface du panneau mobile 13 devrait être réduite et, surtout, le rail 12ₐ devrait se prolonger au milieu du panneau fixe 11, dans sa partie la plus large. Les rails 12ₐ et 12_{b} sont représentés de forme rectiligne dans le cas des figures 1A et 1B sans que, bien entendu, ceci nuise à la généralité de l'invention.

Il faut noter que, sur ces figures, l'échelle des différents éléments n'est pas forcément exacte : généralement, l'angle entre les deux rails est plus faible, et la dimension des éléments de maintien et/ou de guidage est volontairement exagérée, sur la figure, par rapport à celle du panneau mobile, pour faciliter la lisibilité.

Le panneau mobile 13 est solidarisé au rail 12_{b} par un guide inférieur 14, ou glissière, susceptible de coulisser par rapport au rail 12_{b}.

Dans le mode de réalisation illustré, le panneau mobile comprend deux éléments de maintien et/ou de guidage de la partie supérieure du panneau mobile 13 dans le rail 12ₐ. Selon l'invention, deux moyens de rappel 16ₐ, 16_{b} agissent respectivement sur les éléments de maintien et/ou de guidage 15ₐ, 15_{b}, ou pions de guidage, afin de les maintenir en contact avec le rail 12ₐ quelle que soit la position du panneau mobile 13, et ainsi compenser l'écartement entre les rails, comme cela apparaît clairement sur les figures 1A et 1B, où :
- en figure 1A, le panneau mobile est en position fermée, et l'écartement est le plus faible ;
- en figure 1B, le panneau mobile est en position ouverte, et l'écartement est plus important.

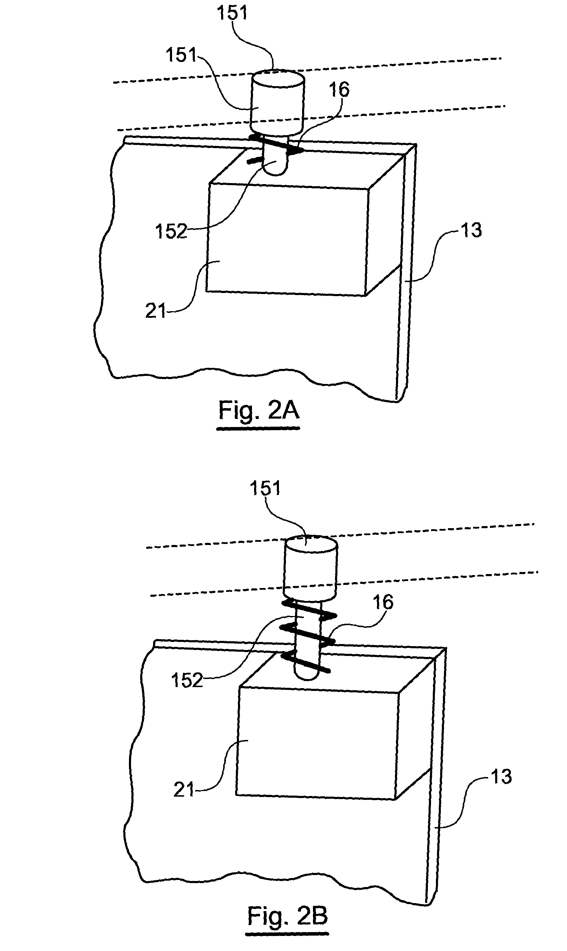

Les figures 2A (position fermée) et 2B (position ouverte) illustrent de façon plus précise le mode de réalisation des figures 1A et 1B. Chaque pion 15 comprend une tête 151, de forme adaptée pour coopérer avec le rail 12, et un corps 152 reliant la tête 151 au panneau mobile, par exemple par l'intermédiaire d'un cadre 21 rapporté sur la face intérieure de ce panneau mobile.Le corps 152 est avantageusement cylindrique, et porte le ressort hélicoïdal 16. Les dimensions de la tête 151 sont supérieures à celles du corps 152, de façon à maintenir le ressort 16 entre le cadre et la tête.

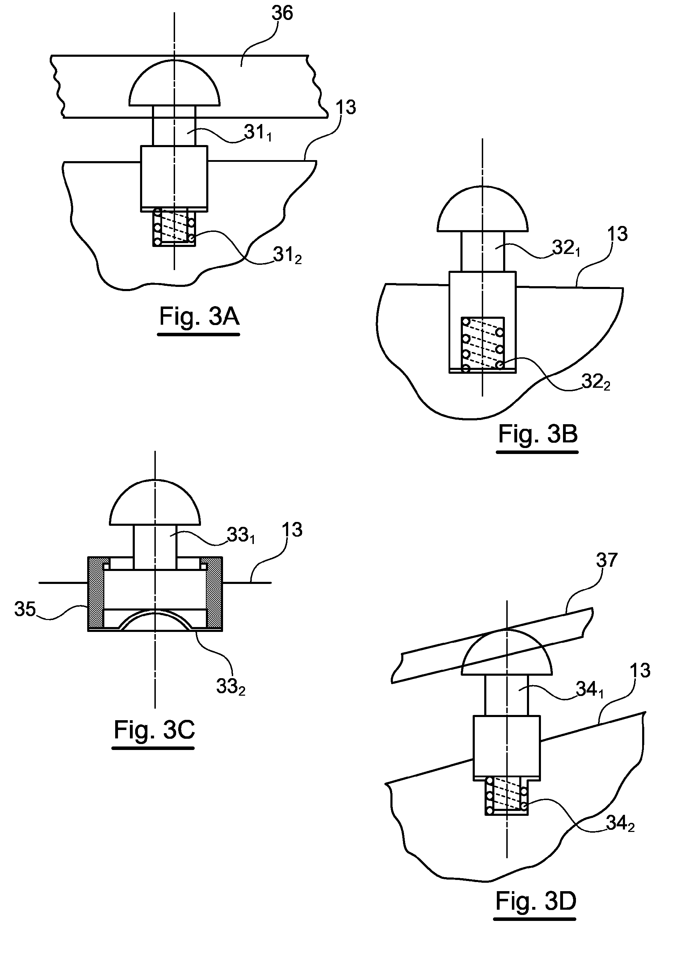

D'autres formes et d'autres modes de réalisation sont bien sûr envisageables. A titre d'exemples, diverses mises en oeuvre de l'élément de maintien et/ou de guidage et des moyens de rappels associés sont illustrées par les figures 3A, 3B, 3C et 3D.

L'élément de maintien et/ou de guidage 31₁, 32₁, 33₁ 34₁ est avantageusement une pièce de révolution comprenant une tête, par exemple bombée de forme semi hémisphérique, mobile selon un axe par rapport au panneau mobile 13.

L'inclinaison de l'élément de maintien et/ou de guidage n'est pas nécessairement perpendiculaire à l'arête du panneau mobile comme l'illustre la figure 3D. La tête reste en contact avec le profil du rail, et peut pénétrer complètement dans le rail 36, ou avoir des dimensions supérieures à la hauteur du rail 37. Le pion est guidé en translation par rapport au panneau mobile 13 par une portée droite ou par l'intermédiaire d'une pièce intermédiaire 35.

Des ressorts hélicoïdaux 31₂, 32₂, 34₂ ou une lame fixe 33₂ peuvent constituer les moyens de rappel et sont disposés autour du corps des éléments de maintien et/ou de guidage 31₂, 34₂, dans un logement à l'intérieur du corps 32₂ ou éventuellement maintenu en appui sous l'élément de maintien et de guidage 33₁.

Ces quatre exemples ne constituent pas, bien entendu, un ensemble exhaustif et de nombreuses variantes peuvent être envisagées, sans sortir du cadre de l'invention.

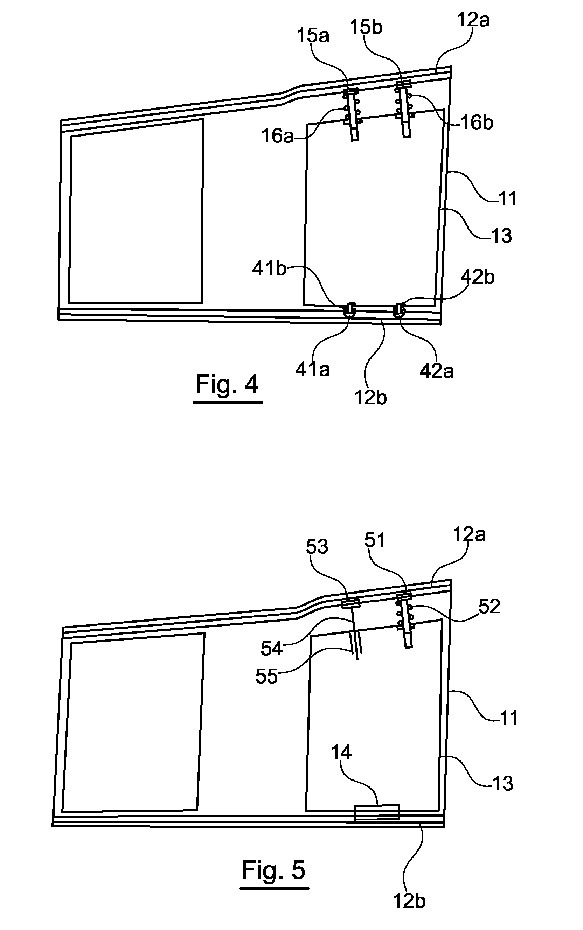

Par ailleurs, l'invention ne se limite pas au cas de rails rectilignes. Cet aspect est illustré par la figure 4. La liaison coulissante du panneau mobile 13 avec le rail inférieur 12_{b} est notamment assurée au moyen d'éléments de maintien et/ou de guidage 41ₐ, 42ₐ et de leurs moyens de rappel correspondants 41_{b}, 42_{b}. Ce mode de réalisation est particulièrement adapté au cas où les rails sont disposés sensiblement verticalement ou pour les baies horizontales.

Un troisième mode de réalisation de l'invention est illustré figure 5. Cette variante du mode de réalisation des figures 1A et 1B ne comporte qu'un pion selon l'invention, l'autre pion étant remplacé par un ensemble de guidage conforme au document FR-01 12404 et possédant un degré de liberté supplémentaire à celui d'une glissière. Il est composé d'une coulisse 54, solidaire de la glissière 53, se déplaçant dans le coulisseau 55 fixé sur le panneau mobile 13. Afin de pouvoir épouser la courbure du rail 12ₐ, la glissière 53 s'étend sur une longueur réduite au maximum.

Dans une autre variante de l'invention, le rail des éléments de coulissement d'un ensemble glissière 14 peut être monté coulissant sur le panneau fixe 11.

Selon encore une autre variante, c'est le rail supérieur qui peut être mobile, en mettant en oeuvre le même principe.

Par ailleurs, les moyens mis en oeuvre peuvent varier, en forme et en nombre notamment. Ainsi, il peut y avoir :
- plusieurs panneaux mobiles ;
- un unique ou inversement plus de deux élément(s) de maintien et/ou de guidage ou d'ensemble de guidage selon le document FR-01 12404 associés à chaque rail ;
- le contact rail/tête peut être de tout type adéquat.

En outre, l'invention ne se limite pas à un coulissement horizontal, mais peut également être mis en oeuvre pour un coulissement vertical, ou plus généralement selon une direction quelconque.

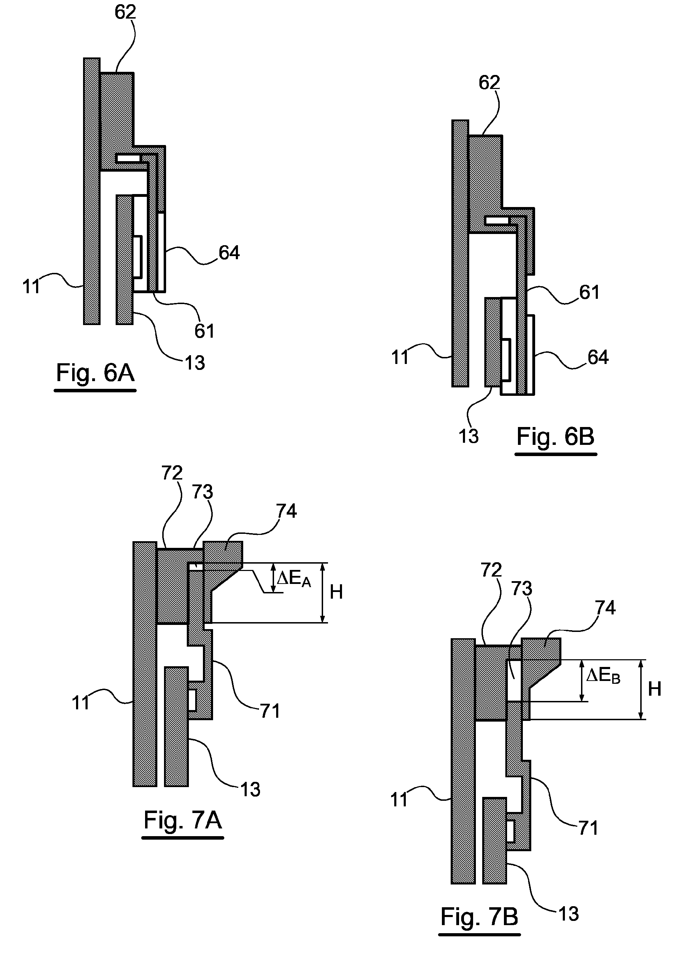

Les figures 6A et 6B illustrent, en coupe, un mode de réalisation du maintien et du guidage d'un panneau mobile, selon laquelle la tête est maintenue en contact avec le rail par la mise en oeuvre d'une forme adaptée coopérant avec le rail.

Avantageusement, l'élément de maintien et de guidage 61, ou patte rétractable, comprend un corps de forme préférentiellement rectangulaire cintrée à angle droit à une de ses extrémités. La patte 61 coulisse dans le rail 62 suivant sa direction principale dans un logement en « L » prévu à cet effet. L'autre extrémité de la patte 61 coopère avec le cadre 64, solidaire du panneau mobile 13, pour guider et/ou maintenir le panneau mobile dans son mouvement de coulissement entre la position fermée (figure 6A) et la position ouverte (figure 6B).

En passant de la position de fermeture à la position ouverte, la patte 61 est poussée par le cadre 64 et se déplace suivant la direction principale du rail 62, ce qui permet le guidage du panneau mobile 13. L'écartement ou le jeu variable entre le bord panneau mobile et le rail 62 est compensé par le glissement du cadre 64 le long de la patte 61.

Selon encore une autre approche, illustrée par les figures 7A et 7B, le maintien et le guidage du panneau mobile 13 peut être réalisé au moyen d'une patte de coulissement 71, solidaire du panneau mobile, qui se déplace librement dans un gorge 73 solidaire du panneau fixe 11.

Ainsi, les figures 7A et 7B présentent, en coupe, le détail du mouvement d'une patte de coulissement 71 fixée sur la partie supérieure d'un panneau mobile 13 se déplaçant suivant un plan vertical. Le panneau mobile 13 est guidé par la patte de coulissement 71 dans la gorge, de profondeur constante H, formée par le rail supérieur 72 et par la tôle de la carrosserie du véhicule 74.

Dans le coulissement de la position fermée, illustrée par la figure 7A, à la position ouverte, figure 7B, la patte de coulissement va demeurer dans le logement formé par la gorge et glisser progressivement contre le rail supérieur 72 selon la direction verticale. La dimension de la patte de coulissement est suffisante pour que l'écartement entre l'extrémité supérieure de la patte et le fond de la gorge, qui varie de la valeur ΔE_{A} (voir figure 7A) à la valeur ΔE_{B} (voir figure 7B), reste toujours inférieur à la profondeur de la gorge.

Selon encore un autre mode de réalisation, illustré figures 8A à 8D, le maintien et le guidage du panneau mobile 13 suivant un plan vertical est mis en oeuvre au moyen d'une pièce de guidage mobile intermédiaire 81 placée entre le panneau mobile 13 et le rail 82, et s'étendant sur toute la longueur du rail 82, ou au moins sur une grande partie de celui-ci.

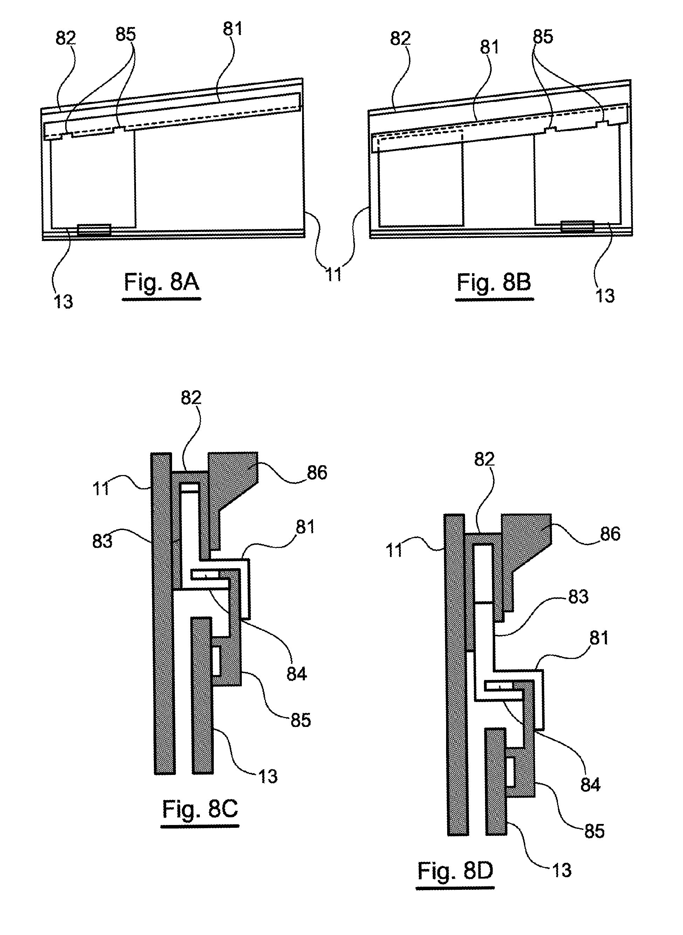

La pièce de guidage 81, entraînée par le panneau mobile 13, coulisse dans la gorge interne du rail 82 suivant la direction verticale lors du déplacement de la paroi mobile 13 de la position fermée (voir figure 8A) à la position ouverte (voir figure 8B), et inversement, et assure ainsi le maintien du panneau mobile 13 dans la position verticale.

On notera que l'angle entre les rails tout comme les dimensions des pièces composant la liaison du panneau mobile 13 avec le rail supérieur 82 ont été volontairement exagérés sur ces deux figures pour en accroître la lisibilité.

Les figures 8C et 8D présentent une vue de détail du système de maintien et de guidage suivant une coupe perpendiculaire au plan du panneau mobile 13.

La pièce de guidage mobile intermédiaire 81 comprend un plat 83 qui coopère avec le rail 82, et une gorge traversante 84 en « L ». Afin de guider le panneau mobile 13 suivant la direction horizontale, deux pattes 85, solidaires du panneau mobile 13, coulissent dans la gorge 84. Le nombre de pattes peut bien sûr être adapté (une, deux, trois, ...). Le rail 82, fixé au panneau fixe 11 peut être solidarisé à et/ou en partie masqué par la carrosserie 86 du véhicule. Il a une forme en « U » de façon à accueillir le plat 83.

Dans la position fermée, illustrée figure 8C, le plat 83 pénètre jusqu'au fond de la gorge du rail 82. Solidaire du panneau mobile 13, la pièce de guidage mobile intermédiaire 81 se déplace progressivement vers le bas jusqu'à la position ouverte (voir figure 8D).

## Revendications

1. Dispositif d'obturation d'une baie ménagée dans un véhicule automobile, comprenant une partie fixe et au moins un panneau mobile par rapport à ladite partie fixe et guidé en coulissement par deux rails non parallèles solidarisés à ladite partie fixe, ledit panneau mobile pouvant prendre une position fermée dans laquelle il obture une ouverture définie dans ladite partie fixe et une position ouverte dans laquelle il libère au moins en partie ladite ouverture, **caractérisé en ce que** ledit panneau mobile porte au moins un élément de maintien et/ou de guidage, présentant une tête guidée dans un desdits rails, ledit élément de maintien et/ou de guidage coopérant avec des moyens pour maintenir en contact ladite tête avec l'intérieur dudit rail.

2. Dispositif d'obturation d'une baie suivant la revendication 1, **caractérisé en ce que** lesdits moyens pour maintenir en contact ladite tête avec l'intérieur dudit rail comprennent des moyens de rappel.

3. Dispositif d'obturation d'une baie suivant la revendication 2, **caractérisé en ce que** ladite tête est montée sur un corps sur lequel lesdits moyens de rappel sont montés.

4. Dispositif d'obturation d'une baie suivant l'une des revendications 2 et 3, **caractérisé en ce que** le ou lesdits éléments de maintien et/ou de guidage présentent une forme de révolution.

5. Dispositif d'obturation d'une baie selon les revendications 3 et 4, **caractérisé en ce que** la section dudit corps est inférieure à la section de ladite tête, de façon à maintenir lesdits moyens de rappel.

6. Dispositif d'obturation d'une baie suivant l'une des revendications 1 à 5, **caractérisé en ce que** les moyens de rappel comprennent au moins un ressort hélicoïdal.

7. Dispositif d'obturation d'une baie suivant l'une des revendications 1 à 6, **caractérisé en ce que** le ou lesdits éléments de maintien et/ou de guidage se déplacent suivant un axe par rapport au panneau mobile.

8. Dispositif d'obturation d'une baie suivant l'une des revendications 1 à 7, **caractérisé en ce que** ladite tête de l'élément de maintien et/ou de guidage est de forme sensiblement cylindrique ou semi-hémisphérique.

9. Dispositif d'obturation d'une baie suivant l'une des revendications 1 à 5, **caractérisé en ce que** les moyens de rappel sont montés à l'intérieur du et/ou sous le corps de l'élément de maintien et/ou de guidage.

10. Dispositif d'obturation d'une baie suivant l'une des revendications 1 à 9, **caractérisé en ce que** lesdits moyens de rappel comprennent au moins une lame flexible.

11. Dispositif d'obturation d'une baie suivant l'une quelconque des revendications 1 à 10, **caractérisé en ce que** ladite tête présente au moins une portion d'accrochage avec un logement correspondant formé dans ledit rail.

12. Dispositif d'obturation d'une baie selon la revendication 11, **caractérisé en ce que** ladite portion d'accrochage et ledit logement s'étendent sensiblement perpendiculairement à l'axe desdits moyens de maintien et/ou de guidage.

13. Véhicule automobile comprenant au moins un dispositif d'obturation d'une baie ménagée dans ledit véhicule automobile, comprenant une partie fixe et au moins un panneau mobile par rapport à ladite partie fixe et guidé en coulissement par deux rails non parallèles solidarisés à ladite partie fixe, ledit panneau mobile pouvant prendre une position fermée dans laquelle il obture une ouverture définie dans ladite partie fixe et une position ouverte dans laquelle il libère au moins en partie ladite ouverture, **caractérisé en ce que** ledit panneau mobile porte au moins un élément de maintien et/ou de guidage, présentant une tête guidée dans un desdits rails, ledit élément de maintien et/ou de guidage coopérant avec des moyens pour maintenir en contact ladite tête avec l'intérieur dudit rail.
